# EUROPEAN PATENT APPLICATION

(11) **EP 4 401 262 A1**
(43) Date of publication of application: **17.07.2024**
(21) Application number: 24150906.6
(22) Date of filing: 09.01.2024
(51) Int. Cl.: H02J 3/14, H02J 13/00

(54) **METHODS, DEVICES, AND SYSTEMS FOR REDUCING ENERGY CONSUMPTION USING GAMIFICATION**

(30) Priority: 10.01.2023 US 202363479226 P
(71) Applicant: Iotecha Corp., Cranbury NJ 08512 (US)
(72) Inventor: LOGVINOV, Oleg, Weston 06883 (US); SARUBBI, Kimberly, Brentwood 37027 (US)
(74) Representative: Gill Jennings & Every LLP

(57) **Abstract**

Methods, systems, and devices are disclosed herein for reducing energy usage using gamification. In one embodiment, a programmatic method includes (1) receiving a first plurality of energy values associated with a first plurality of energy sinks, (2) determining a first plurality of game selections based on the first plurality of energy values, (3) transmitting the first plurality of game selections to a first client device, (4) receiving a first game selection associated with the first plurality of game selections from the first client device, (5) determining a first game status based on the first game selection, and (6) transmitting the first game status to the first client device. A first user is associated with the first client device and the first plurality of energy sinks.

## Description

### PRIORITY CLAIM

This application claims the benefit of U.S. Provisional Patent Application Serial No. 63/479,226 (Attorney Docket No. 1281/32 PROV), titled "METHODS, DEVICES, AND SYSTEMS FOR REDUCING ENERGY CONSUMPTION USING GAMIFICATION," filed January 10, 2023, the entire contents of which are hereby incorporated herein by reference.

### TECHNICAL FIELD

The present invention relates generally to energy reduction. More particularly, methods, devices, and systems are disclosed for reducing energy usage using gamification.

### BACKGROUND

With the growth of electric vehicles (EVs), the EV charging equipment market is expected to have a compound annual growth rate (CAGR) exceeding 27 percent through 2025. In addition to the public chargers, users are installing home based EV chargers for convenience. With these EV purchases, home based EV charging has increased producing additional demands on already stretch power grids.

Accordingly, additional methods, devices, and systems are needed for reducing peak demand on power grids.

### SUMMARY

Methods, systems, and devices are disclosed herein for reducing energy usage using gamification. In one embodiment, a programmatic method includes (1) receiving a first plurality of energy values associated with a first plurality of energy sinks, (2) determining a first plurality of game selections based on the first plurality of energy values, (3) transmitting the first plurality of game selections to a first client device, (4) receiving a first game selection associated with the first plurality of game selections from the first client device, (5) determining a first game status based on the first game selection, and (6) transmitting the first game status to the first client device. A first user is associated with the first client device and the first plurality of energy sinks.

In some embodiments, the first plurality of energy sinks may include a first plurality of appliances associated with the first user.

In some embodiments, the programmatic method may further include transmitting an energy reduction request to a first subset of the first plurality of energy sinks based on the first game selection.

In some embodiments, the energy reduction request may be configured to adjust a first thermostat associated with a first heating ventilation and air conditioning (HVAC) system and the first plurality of energy sinks may include the first HVAC system.

In further embodiments, the energy reduction request may be further configured to adjust a second thermostat associated with a second HVAC system and the first plurality of energy sinks may further include the second HVAC system.

In some embodiments, the energy reduction request may be configured to adjust a first charging rate of a first electric vehicle (EV) charger and the first plurality of energy sinks may include the first EV charger.

In some embodiments, the energy reduction request may be further configured to adjust a second charging rate of a second EV charger and the first plurality of energy sinks further includes the second EV charger.

In some embodiments, the energy reduction request may be configured to adjust a first charging schedule of a first EV charger and the first plurality of energy sinks includes the first EV charger.

In some embodiments, the energy reduction request may be further configured to adjust a second charging schedule of a second EV charger and the first plurality of energy sinks further may include the second EV charger.

In some embodiments, the first plurality of energy values may be received from a home automation system associated with the first plurality of energy sinks.

In some embodiments, the first plurality of energy values may be received from a smart meter associated with the first plurality of energy sinks.

In further embodiments, the smart meter may be managed by an electric utility.

In some embodiments, transmitting the first plurality of game selections to the first client device may be triggered based on a first power load on at least of a portion of a power grid associated with an electric utility.

In some embodiments, determining the first plurality of game selections may be further based on the first power load associated with the electric utility.

In some embodiments, transmitting the first plurality of game selections to the first client device may be triggered based on a first available power on at least a portion of a power grid associated with an electric utility.

In some embodiments, determining the first plurality of game selections may be further based on the first available power of the power grid associated with the electric utility.

In some embodiments, transmitting the first plurality of game selections to the first client device may be triggered based on a first power load of a private power grid associated with the first user.

In some embodiments, determining the first plurality of game selections may be further based on the first power load of the private power grid.

In some embodiments, the private power grid may be associated with at least one solar panel.

In some embodiments, transmitting the first plurality of game selections to the first client device may be triggered based on a first available power of a private power grid associated with the first user.

In some embodiments, determining the first plurality of game selections may be further based on the first available power of the private power grid.

In some embodiments, the private power grid may be associated with at least one solar panel.

In some embodiments, determining the first plurality of game selections may be further based on a game template.

In some embodiments, the programmatic method may further include determining the game template based on a game selection received from the first client device.

In some embodiments, the programmatic method may further include determining the game template based on a first user profile.

In some embodiments, the first user profile may include user demographic data.

In some embodiments, the first user profile may include user preference data.

In some embodiments, the first user profile may include user eco-conscious data.

In some embodiments, the first user profile may include user purchasing history data.

In some embodiments, the first user profile may include user EV data.

In some embodiments, the user EV data may include at least one of EV ownership type, EV driving routes, EV energy usage, and EV ownership history.

In some embodiments, the first user profile may include user home ownership data.

In some embodiments, the first user profile may include user home energy usage data.

In some embodiments, the first user profile may include user device data associated with the first client device.

In some embodiments, the first client device may be a smart phone, a smart tablet, a smart watch, a smart television (TV), a personal computer (PC), a laptop, or the like.

In some embodiments, the first client device may be a home-based EV charger including an interactive display screen.

In some embodiments, the first plurality of energy sinks may be electrically coupled with a private power grid.

In some embodiments, the private power grid may be configured to source power from an EV electrically coupled with a home-based EV charger that is electrically coupled with the private power grid.

In some embodiments, the first client device may be a home-based EV charger.

In some embodiments, the first client device may be configured to display the first plurality of game selections via a dedicated application, a web browser, or the like.

In some embodiments, each selection of the first plurality of game selections may include a weighted value.

In some embodiments, each weighted value may be based on one or more of the first plurality of energy values associated with a plurality of energy sinks.

In some embodiments, each weighted value may be further based on a random variable.

In some embodiments, the first client device may be configured to display an indication of each weighted value.

In some embodiments, the programmatic method may further include determining a second plurality of game selections based on the first plurality of energy values and the first game selection, transmitting the second plurality of game selections to the first client device, receiving a second game selection associated with the second plurality of game selections from the first client device, determining a second game status based on the second game selection, and transmitting the second game status to the first client device.

In some embodiments, determining the first plurality of game selections may be further based on a game template and the game template may be at a card game template, a bingo game template, a dice game template, a board game template, a roulette wheel template, a slot machine template, a video poker machine template, a fish table template, or the like.

In some embodiments, the programmatic method may further include determining a game token value based on the first game status, generating a game token based on the game token value, and transmitting the game token to the first client device.

In some embodiments, the game token may be redeemable as a credit to the first user.

In some embodiments, the credit to the first user may be an energy credit.

In some embodiments, the credit to the first user may be a shopping credit.

In some embodiments, the credit to the first user may be a restaurant credit.

In some embodiments, the credit to the first user may be a stored value card.

In some embodiments, the credit to the first user may be a travel voucher.

In some embodiments, the game token value may be used as an option by the first user to determine a second game status.

In some embodiments, the game token may be a non-fungible token (NFT).

In some embodiments, the first plurality of game selections may include a challenge task for the first user.

In further embodiments, the challenge task may include a first request to adjust a first thermostat.

In some embodiments, the challenge task may further include a second request to adjust a second thermostat.

In some embodiments, the challenge task may include a first request to pause or cancel a first charging session of an EV.

In some embodiments, the challenge task may further include a second request to pause or cancel a second charging session of a second EV.

In some embodiments, the challenge task may include a first request to switch at least a portion of the first plurality of energy sinks to an alternate energy source.

In further embodiments, the alternate energy source may include at least one solar panel.

In some embodiments, the alternate energy source may include at least one EV.

In another embodiment, a server includes a memory, a database, and a processor. The processor is configured to perform a method. The method includes (1) receiving a first plurality of energy values associated with a first plurality of energy sinks, (2) determining a first plurality of game selections based on the first plurality of energy values, (3) transmitting the first plurality of game selections to a first client device, (4) receiving a first game selection associated with the first plurality of game selections from the first client device, (5) determining a first game status based on the first game selection, and (6) transmitting the first game status to the first client device. A first user is associated with the first client device and the first plurality of energy sinks.

In another embodiment, a non-transitory computer readable medium is disclosed. The computer readable medium includes a plurality of machine-readable instructions which when executed by one or more processors of a server are adapted to cause the server to perform a method. The method includes (1) receiving a first plurality of energy values associated with a first plurality of energy sinks, (2) determining a first plurality of game selections based on the first plurality of energy values, (3) transmitting the first plurality of game selections to a first client device, (4) receiving a first game selection associated with the first plurality of game selections from the first client device, (5) determining a first game status based on the first game selection, and (6) transmitting the first game status to the first client device. A first user is associated with the first client device and the first plurality of energy sinks.

The features and advantages described in this summary and the following detailed description are not all-inclusive. Many additional features and advantages will be apparent to one of ordinary skill in the art in view of the drawings, specification, and claims presented herein.

### BRIEF DESCRIPTION OF THE DRAWINGS

The present embodiments are illustrated by way of example and are not intended to be limited by the figures of the accompanying drawings. In the drawings:
FIG. 1 depicts a flow chart illustrating a programmatic method for reducing energy usage using gamification in accordance with embodiments of the present disclosure.
FIG. 2 depicts a block diagram illustrating one embodiment of a server for implementing the programmatic method of FIG. 1 and the associated embodiments in accordance with embodiments of the present disclosure.
FIG. 3 depicts a block diagram illustrating a mobile device in accordance with embodiments of the present disclosure.
FIG. 4 depicts a block diagram illustrating a personal computer in accordance with embodiments of the present disclosure.
FIG. 5 depicts a block diagram illustrating an electric vehicle (EV) charger in accordance with embodiments of the present disclosure.
FIG. 6 depicts a block diagram illustrating a system that includes the server of FIG. 2, the mobile device of FIG. 3, the personal computer of FIG 4, the EV charger of FIG 5, and an EV in accordance with embodiments of the present disclosure.

### DETAILED DESCRIPTION

The following description and drawings are illustrative and are not to be construed as limiting. Numerous specific details are described to provide a thorough understanding of the disclosure. However, in certain instances, well-known or conventional details are not described in order to avoid obscuring the description.

Reference in this specification to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

The terms used in this specification generally have their ordinary meanings in the art, within the context of the disclosure, and in the specific context where each term is used. Certain terms that are used to describe the disclosure are discussed below, or elsewhere in the specification, to provide additional guidance to the practitioner regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that same thing can be said in more than one way.

Consequently, alternative language and synonyms may be used for any one or more of the terms discussed herein, nor is any special significance to be placed upon whether or not a term is elaborated or discussed herein. Synonyms for certain terms are provided. A recital of one or more synonyms does not exclude the use of other synonyms. The use of examples anywhere in this specification, including examples of any terms discussed herein, is illustrative only, and is not intended to further limit the scope and meaning of the disclosure or of any exemplified term. Likewise, the disclosure is not limited to various embodiments given in this specification.

Unless otherwise indicated, all numbers expressing quantities of components, conditions, and so forth used in the specification and claims are to be understood as being modified in all instances by the term "about." Accordingly, unless indicated to the contrary, the numerical parameters set forth in the instant specification and attached claims are approximations that can vary depending upon the desired properties sought to be obtained by the presently disclosed subject matter.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, all technical and scientific terms used herein have the same meaning as commonly understood by one of ordinary skill in the art to which this disclosure pertains. In the case of conflict, the present document, including definitions, will control.

Methods, systems, and devices are disclosed herein for reducing energy usage using gamification. The following embodiments are based on a single household. However, a person of ordinary skill in the art may apply the embodiments to create a crowd sourced demand reduction approach based on the gamification when loads are above a certain threshold on a power grid.

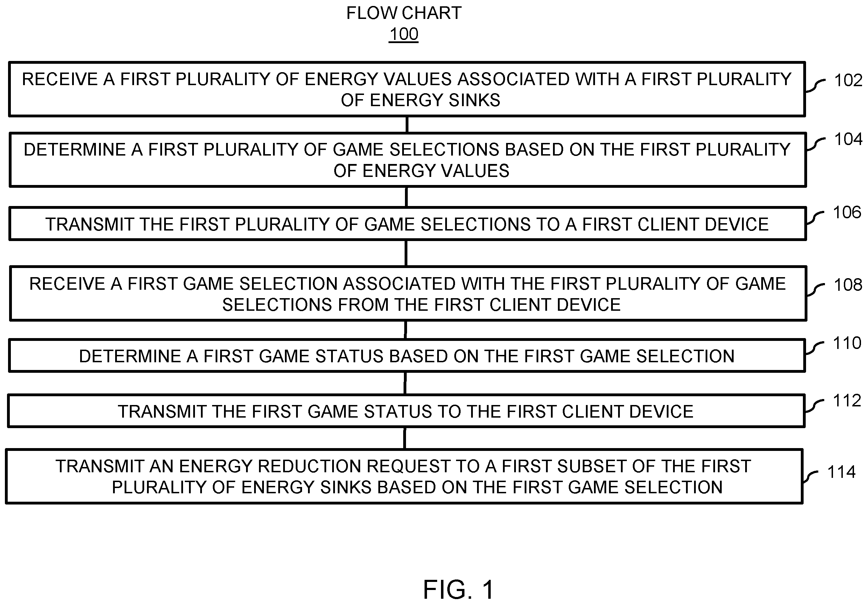

FIG. 1 depicts a flow chart 100 illustrating a programmatic method for reducing energy usage using gamification in accordance with embodiments of the present disclosure. In some embodiments, the programmatic method may be executed on at least one computing device. In further embodiments, the programmatic method may be executed on at least one server. In still further embodiments, the programmatic method may be executed within a cloud computing environment.

In step 102, the programmatic method includes receiving a first plurality of energy values associated with a first plurality of energy sinks. The first plurality of energy values may be received from a home automation system associated with the first plurality of energy sinks. In another scenario, the first plurality of energy values may be received from a smart meter associated with the first plurality of energy sinks. The smart meter may be managed by an electric utility.

In step 104, the programmatic method further includes determining a first plurality of game selections based on the first plurality of energy values. Determining the first plurality of game selections may be further based on a game template and the programmatic method may further include determining the game template based on a game selection received from the first client device. The game template may be a card game template, a bingo game template, a dice game template, a board game template, a roulette wheel template, a slot machine template, a video poker machine template, a fish table template, and/or the like.

In another scenario, the programmatic method may further include determining the game template based on a first user profile. The first user profile may include user demographic data. The first user profile may include user preference data, user eco-conscious data, user purchasing history data, user home ownership data, user home energy usage data, user device data, user electric vehicle (EV) data, and/or the like. The user EV data may include EV ownership type, EV driving routes, EV energy usage, EV ownership history, and/or the like.

In step 106, the programmatic method further includes transmitting the first plurality of game selections to a first client device. A first user is associated with the first client device and the first plurality of energy sinks. The first plurality of energy sinks may include a first plurality of appliances associated with the first user. The first client device may be a smart phone, a smart tablet, a smart watch, a smart television (TV), a personal computer (PC), a laptop, a home-based EV charger including an interactive display screen, or the like.

The first plurality of game selections may include a challenge task for the first user. The challenge task may include a request to adjust a first thermostat. The challenge task further may further include a request to adjust a second thermostat.

The challenge task may also include a request to pause or cancel a first charging session of a first EV. The challenge task may further include a second request to pause or cancel a second charging session of a second EV.

The challenge task may include a request to switch at least a portion of the first plurality of energy sinks to an alternate energy source. The alternate energy source may include at least one solar panel, at least one EV, and/or the like.

The first client device may be configured to display the first plurality of game selections via a dedicated application and/or a web browser. The dedicated application may be a Windows^{®} application, a macOS^{®} application, an iOS^{®} application, an Android^{®} application, and/or the like. The web browser may be a Microsoft Internet Explorer^{®} browser, a Microsoft Edge^{®} browser, an Apple Safari^{®} browser, a Google Chromed browser, a Mozilla Firefox^{®} browser, an Opera^{®} browser, and/or the like.

Each selection of the first plurality of game selections may include a weighted value. Each weighted value may be based on one or more of the first plurality of energy values associated with a plurality of energy sinks. Each weighted value may be further based on a random variable. The first client device may be configured to display an indication of each weighted value.

Transmitting the first plurality of game selections to the first client device may be triggered based on a first power load on at least of a portion of a power grid associated with an electric utility and determining the first plurality of game selections may be further based on the first power load associated with the electric utility.

In another scenario, transmitting the first plurality of game selections to the first client device may be triggered based on a first available power on at least a portion of a power grid associated with an electric utility and determining the first plurality of game selections may be further based on the first available power of the power grid associated with the electric utility.

In another scenario, transmitting the first plurality of game selections to the first client device may be triggered based on a first power load of a private power grid associated with the first user and determining the first plurality of game selections may be further based on the first power load of the private power grid. The private power grid may be associated with at least one solar panel. The private power grid may also derive power from at least one EV connected to a home-based EV charger and the home-based EV charge may include the first client device.

In another scenario, transmitting the first plurality of game selections to the first client device may be triggered based on a first available power of a private power grid associated with the first user and determining the first plurality of game selections may be further based on the first available power of the private power grid. The private power grid may be associated with at least one solar panel. The private power grid may also derive power from at least one EV connected to a home-based EV charger and the home-based EV charge may include the first client device.

In step 108, the programmatic method further includes receiving a first game selection associated with the first plurality of game selections from the first client device.

In step 110, the programmatic method further includes determining a first game status based on the first game selection.

In step 112, the programmatic method further includes transmitting the first game status to the first client device.

In step 114, the programmatic method further includes transmitting an energy reduction request to a first subset of the first plurality of energy sinks based on the first game selection. The energy reduction request may be configured to adjust a first thermostat associated with a first heating ventilation and air conditioning (HVAC) system and the first plurality of energy sinks may include the first HVAC system. The energy reduction request may be further configured to adjust a second thermostat associated with a second HVAC system and the first plurality of energy sinks may further include the second HVAC system.

The energy reduction request may also be configured to adjust a first charging rate of a first EV charger and the first plurality of energy sinks includes the first EV charger. The energy reduction request may be further configured to adjust a second charging rate of a second EV charger and the first plurality of energy sinks may further includes the second EV charger.

The energy reduction request may also be configured to adjust a first charging schedule of an EV charger and the first plurality of energy sinks may include the first EV charger. The energy reduction request may be further configured to adjust a second charging schedule of a second EV charger and the first plurality of energy sinks may further include the second EV charger.

The programmatic method may further include (not shown in FIG. 1) determining a game token value based on the first game status, generating a game token based on the game token value, and transmitting the game token to the first client device. The game token may be redeemable as a credit to the first user. The credit to the first user may be an energy credit, a shopping credit, a restaurant credit, a stored value card, a travel voucher, and/or the like. The game token value may be used as an option by the first user to determine a second game status. The game token may also be a non-fungible token (NFT).

The programmatic method may also further include (not shown in FIG. 1) determining a second plurality of game selections based on the first plurality of energy values and the first game selection, transmitting the second plurality of game selections to the first client device, receiving a second game selection associated with the second plurality of game selections from the first client device, determining a second game status based on the second game selection, and transmitting the second game status to the first client device.

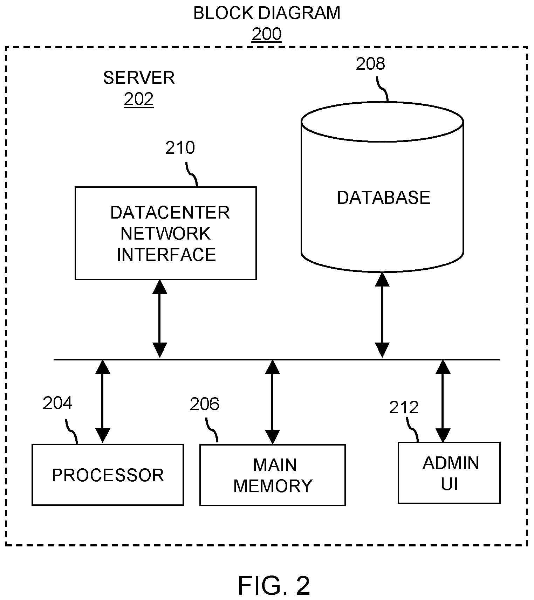

FIG. 2 depicts a block diagram 200 illustrating one embodiment of a server 202 for implementing the programmatic method depicted as described with FIG. 1 and the associated embodiments in accordance with embodiments of the present disclosure. The server 202 may be resident in a cloud-based computing environment The server 202 may include at least one of processor 204, a main memory 206, a database 209, a datacenter network interface 210, and an administration user interface (UI) 212. The server 204 may be configured to host the Ubuntu^{®} server as discussed earlier. In some embodiments Ubuntu^{®} server may be distributed over a plurality of hardware servers using hypervisor technology.

The processor 204 may be a multi-core server class processor suitable for hardware virtualization. The processor may support at least a 64-bit architecture and a single instruction multiple data (SIMD) instruction set. The main memory 206 may include a combination of volatile memory (e.g., random access memory) and non-volatile memory (e.g., flash memory). The database 208 may include one or more hard drives.

The datacenter network interface 210 may provide one or more high-speed communication ports to the data center switches, routers, and/or network storage appliances. The datacenter network interface 210 may include high-speed optical Ethernet, InfiniBand (IB), Internet Small Computer System Interface (iSCSI), and/or Fibre Channel interfaces. The administration UI 212 may support local and/or remote configuration of the server 202 by a datacenter administrator.

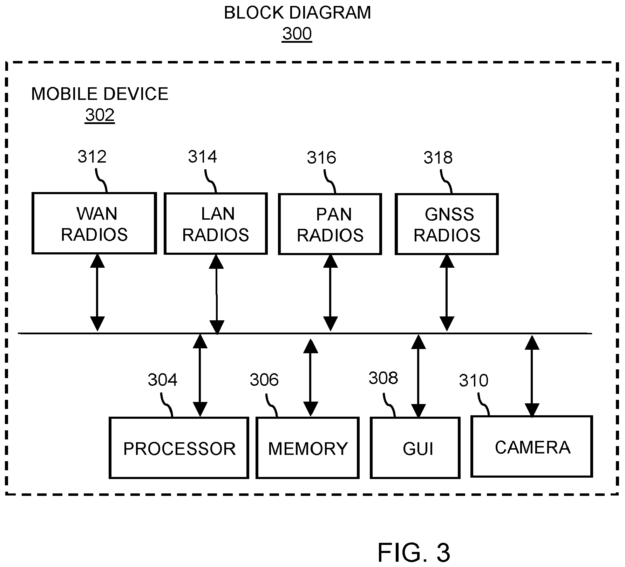

FIG. 3 depicts a block diagram 300 illustrating a mobile device 302 (i.e., a type of client device) in accordance with embodiments of the present disclosure. The mobile device 302 includes at least one processor 304, a memory 306, a graphical user interface (GUI) 308, a camera 310, wide area network (WAN) radios 312, local area network (LAN) radios 314, and personal area network (PAN) radios 316.

In some embodiments, the processor 304 may be a mobile processor such as the Qualcomm^{®} Snapdragon^{™} mobile processor. The memory 306 may include a combination of volatile memory (e.g., random access memory) and non-volatile memory (e.g., flash memory). The memory 306 may be partially integrated with the processor 304. The GUI 308 may be a touchpad display. The WAN radios 312 may include 2G, 3G, 4G, and/or 5G technologies. The LAN radios 314 may include Wi-Fi technologies such as 802.11a, 802.11b/g/n, 802.11ac, 802.11.ax or the like circuitry. The PAN radios 316 may include Bluetooth^{®} technologies.

The mobile 302 also includes GNSS radios 318 for determining current location data of the mobile device 302. The camera 310 may be used to capture a barcode and/or quick response (QR) code as needed by the EV user.

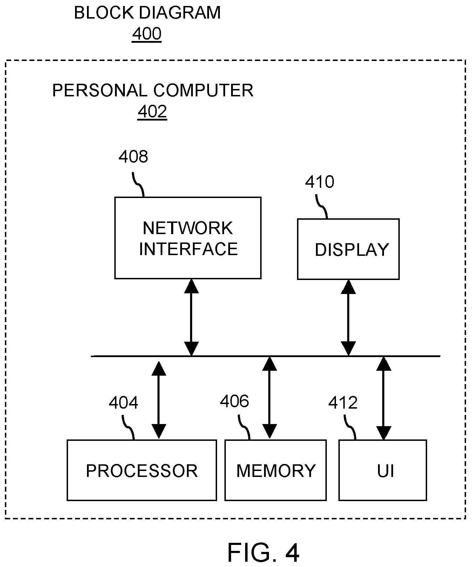

FIG. 4 depicts a block diagram 400 illustrating a personal computer 402 (i.e., another type of client device) in accordance with embodiments of the present disclosure. The personal computer includes at least one processor 404, a memory 406, a network interface 408, a display 410, and a UI 412. The memory 406 may be partially integrated with the processor 404. The UI 412 may include a keyboard and a mouse.

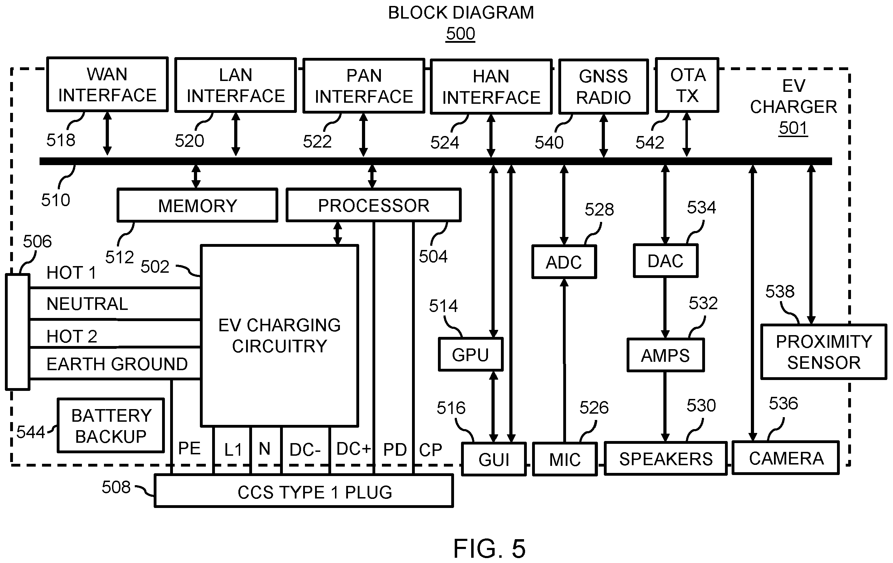

FIG. 5 depicts a block diagram 500 illustrating an EV charger 501 in accordance with embodiments of the present disclosure. The EV charger 501 may be a home-based EV charger (i.e., another type of client device). The EV charger 501 includes EV charging circuitry 502 and a processor 504. The EV charger 501 also includes an electrical interface 506 for connecting to the local power grid. The electrical interface 506 includes electrical connections for Grid Hot 1, Grid Hot 2, Grid Neutral, and earth ground as a split-phase grid connection as is commonly known in the art. The EV charger 501 also includes an electrical interface 508 for electrically coupling a charging cord for charging an EV. The electrical interface 508 may be compliant with a Combined Charging System (CCS) Type 1 connection.

The processor 504 is configured to monitor a Proximity Detection (PD) contact to confirm connection to the EV. The processor 504 is further configured to monitor a control pilot (CP) contact to maintain a charging rate within a safe operating limit of the EV 104. The EV charging circuitry 502 is configured to provide AC power to the electrical interface 608. The EV charging circuitry 502 includes switch circuitry for enabling and/or disabling AC power to the electrical interface 508 via a first AC (L1) contact and a second AC (N) contact. The L1 contact and the N contact provide AC power to internal charging circuitry within the EV. The switch circuitry may include a relay and the relay may be a solid-state relay. The EV charging circuitry 502 may also include an AC-to-DC rectifier for providing DC power to the electrical interface 508 via a DC+ contact and a DC- contact. The DC+ contact and the DC- contact provide charging current to the battery pack of the EV in this scenario.

An address/data bus 510 communicatively couples the processor 504 with a memory 512. In some embodiments, the memory 512 or a portion of the memory 512 may be integrated with the processor 504. The memory 512 may include a combination of volatile memory and non-volatile memory. In some embodiments the processor 504 and the memory 512 may be embedded in a microcontroller.

The address/data bus 510 also communicatively couples the processor 504 with a graphical processing unit (GPU) 514. The GPU 514 is communicatively coupled with a graphical user interface (GUI) 516 (e.g., a touch pad display).

The address/data bus 510 also communicatively couples the processor 504 with a wide area network (WAN0 interface 518, a local area network (LAN0 interface 520, a personal area network (PAN) interface 522, and a home area network (HAN) interface 524. The WAN interface 518 may be compliant with 2G, 3G, 4G, and/or 5G technologies networks including the Internet. The LAN interface 520 may include an Ethernet interface and/or wireless LAN interfaces such as Wi-Fi (e.g., 802.11a, 802.11b/g/n, and/or 802.11ac circuitry). The PAN interface 522 may be a Bluetooth^{®} interface. The HAN interface may include a ZigBee^{®} interface and/or a Z-wave^{®} interface. The HAN interface 524 may also provide hub functionality.

A microphone (MIC) 526 is communicatively coupled with the address/data bus 510 via an analog-to-digital converter (ADC) 228. The address/data bus 510 is also communicatively coupled with one or more speakers 530 via one or more amplifiers (amps) 532 and one or more digital-to-analog converters (DACs) 534.

The address/data bus 510 also communicatively couples the processor 504 with a camera 536 and a proximity sensor 538. The proximity sensor 538 may include an infrared sensor, a Doppler effect sensor, a sonar sensor, and/or the like. The proximity sensor 538 may be used to detect a presence of a user and/or the EV within a presence detect area. The camera 536 may also be used to detect the presence of the user and/or the EV. The proximity sensor 538 and the camera 536 may be used simultaneously to increase the reliability of presence detection. One or more global navigation satellite system (GNSS) radios 540 also provide location data to the processor 504 via the address/data bus 510.

An over-the-air OTA transmitter 542 is also communicatively coupled with processor 504 via the address/data bus 510. The OTA transmitter 542 may be used to provide the media content (e.g., advertisements, product promotions, product placements, and/or the like) to one or more television (TV) receivers. Additionally, the OTA transmitter 542 may provide a user invitation, vendor invitation, and/or event invitation via a barcode or QR code to the one or more TV receivers. The OTA transmitter 542 may include transcoding circuitry for converting formats of media data and/or invitations. The OTA transmitter 542 may also include a TV receiver and a tuner for determining channel spectrum availability in the local area.

The EV charger 501 may also include a battery backup 544. Additionally, the EV charger may include a battery charger (not shown in FIG. 5).

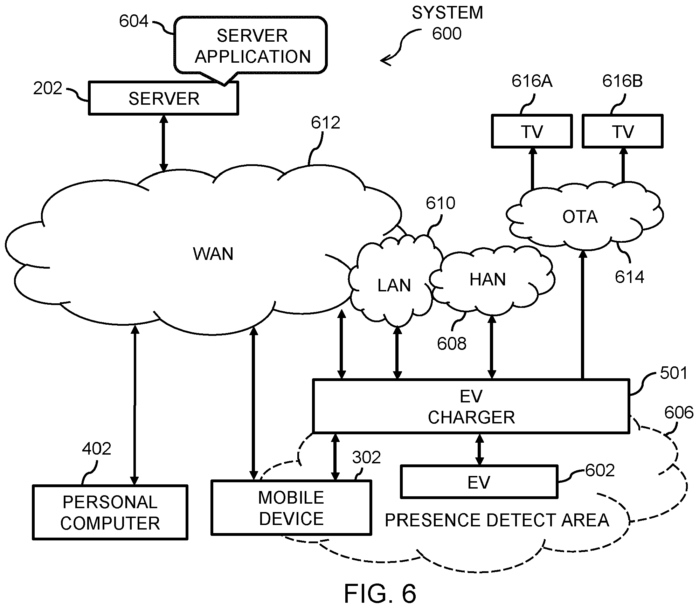

FIG. 6 depicts a block diagram illustrating a system 600 that includes the server 202, the mobile device 302, the personal computer 402, the EV charger 501, and an EV 602 in accordance with embodiments of the present disclosure. The system 600 also includes a server application 604 for implementing the programmatic method of flowchart 100. The EV charger 501 has a presence detect area 606 where a user and the mobile device 302 may be located during an EV charging session. The server 202, the mobile device 302, the personal computer 402, and the EV charger 501 may also be configured to communication over a home area network (HAN) 608, a local area network (LAN) 610, and/or a wide area network (WAN) 612. Additionally, The EV charger 501 may be able to broadcast content over-the-air (OTA) 614 to a plurality of televisions (TVs) such as TV 134A and TV 134B.

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium (including, but not limited to, non-transitory computer readable storage media). A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including object oriented and/or procedural programming languages. Programming languages may include, but are not limited to: Ruby, JavaScript, Java, Python, Ruby, PHP, C, C++, C#, Objective-C, Go, Scala, Swift, Kotlin, OCaml, or the like. The program code may execute entirely on the user's computer, partly on the user's computer, as a stand-alone software package, partly on the user's computer, and partly on a remote computer or entirely on the remote computer or server.

Aspects of the present invention are described in the instant specification with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions.

These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The terminology used herein is for the purpose of describing particular embodiments only and is not intended to be limiting of the invention. As used herein, the singular forms "a," "an" and "the" are intended to include the plural forms as well, unless the context clearly indicates otherwise. Thus, for example, reference to "a user" can include a plurality of such users, and so forth. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description but is not intended to be exhaustive or limited to the invention in the form disclosed. Many modifications and variations will be apparent to those of ordinary skill in the art without departing from the scope and spirit of the invention. The embodiment was chosen and described in order to best explain the principles of the invention and the practical application, and to enable others of ordinary skill in the art to understand the invention for various embodiments with various modifications as are suited to the particular use contemplated.

The descriptions of the various embodiments of the present invention have been presented for purposes of illustration but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A programmatic method for reducing energy usage using gamification, the programmatic method comprising:
receiving a first plurality of energy values associated with a first plurality of energy sinks;
determining a first plurality of game selections based on the first plurality of energy values;
transmitting the first plurality of game selections to a first client device, wherein a first user is associated with the first client device and the first plurality of energy sinks;
receiving a first game selection associated with the first plurality of game selections from the first client device;
determining a first game status based on the first game selection; and
transmitting the first game status to the first client device.

2. The programmatic method of claim 1, wherein the first plurality of energy sinks includes a first plurality of appliances associated with the first user.

3. The programmatic method of claim 1 further comprising transmitting an energy reduction request to a first subset of the first plurality of energy sinks based on the first game selection.

4. The programmatic method of claim 3, wherein:
the energy reduction request is configured to adjust a first thermostat associated with a first heating ventilation and air conditioning (HVAC) system; and
the first plurality of energy sinks includes the first HVAC system.

5. The programmatic method of claim 4, wherein:
the energy reduction request is further configured to adjust a second thermostat associated with a second HVAC system; and
the first plurality of energy sinks further includes the second HVAC system.

6. The programmatic method of claim 3, wherein:
the energy reduction request is configured to adjust a first charging rate of a first electric vehicle (EV) charger; and
the first plurality of energy sinks includes the first EV charger.

7. The programmatic method of claim 6, wherein:
the energy reduction request is further configured to adjust a second charging rate of a second EV charger; and
the first plurality of energy sinks further includes the second EV charger.

8. The programmatic method of claim 3, wherein:
the energy reduction request is configured to adjust a first charging schedule of a first electric vehicle (EV) charger; and
the first plurality of energy sinks includes the first EV charger.

9. The programmatic method of claim 8, wherein:
the energy reduction request is further configured to adjust a second charging schedule of a second EV charger; and
the first plurality of energy sinks further includes the second EV charger.

10. The programmatic method of claim 1, wherein the first plurality of energy values is received from a home automation system associated with the first plurality of energy sinks.

11. The programmatic method of claim 1, wherein the first plurality of energy values is received from a smart meter associated with the first plurality of energy sinks.

12. The programmatic method of claim 11, wherein the smart meter is managed by an electric utility.

13. The programmatic method of claim 1, wherein transmitting the first plurality of game selections to the first client device is triggered based on a first power load on at least of a portion of a power grid associated with an electric utility.

14. The programmatic method of claim 13, wherein determining the first plurality of game selections is further based on the first power load associated with the electric utility.

15. The programmatic method of claim 1, wherein transmitting the first plurality of game selections to the first client device is triggered based on a first available power on at least a portion of a power grid associated with an electric utility.
